# EUROPÄISCHE PATENTANMELDUNG

(11) **EP 4 489 188 A1**
(43) Veröffentlichungstag der Anmeldung: **08.01.2025**
(21) Anmeldenummer: 23183140.5
(22) Anmeldetag: 03.07.2023
(51) Int. Cl.: H01M 50/148, H01M 50/176, H01M 50/548, H01M 50/553, H01M 50/564

(54) **TERMINALGRUPPE MIT HINTERSCHNITT, DECKELANORDNUNG UND HERSTELLUNGSVERFAHREN**

(71) Anmelder: Cellforce Group GmbH, 72138 Kirchentellinsfurt (DE)
(72) Erfinder: Die Erfindernennung liegt noch nicht vor
(74) Vertreter: Müller Schupfner & Partner Patent- und Rechtsanwaltspartnerschaft mbB (Muc)

(57) **Zusammenfassung**

Die Erfindung betrifft eine Terminalgruppe, aufweisend zumindest einen Kollektor und mindestens einen Batteriepol, wobei entlang einer Höhenrichtung zwischen dem mindestens einen Batteriepol und dem Kollektor mindestens ein Verbindungsabschnitt angeordnet ist, wobei der mindestens eine Batteriepol entlang einer Breitenrichtung und/oder Längenrichtung mindestens einen Verbindungsabschnitt zumindest bereichsweise überragt. Des Weiteren betrifft die Erfindung eine Deckelanordnung, ein Verfahren sowie eine Batteriezelle.

## Beschreibung

Die Erfindung betrifft eine Terminalgruppe, aufweisend zumindest einen Kollektor und mindestens einen Batteriepol, eine Deckelanordnung zum randseitigen Verschließen eines Zellgehäuses einer Batteriezelle, ein Verfahren zum Herstellen einer Deckelanordnung und eine Batteriezelle.

Bei der Herstellung von Batteriezellen sind neben Pouch-Zellen auch sogenannten Hardcase-Zellen bekannt. Derartige Batteriezellen besitzen ein starres metallisches Gehäuse und können geometrisch in prismatischer Form oder in Form von Rundzellen ausgebildet sein. Die jeweiligen Batteriepole sind an den sogenannten Terminals der Batteriezelle in erhabener Form auf der Außenseite positioniert, um eine vereinfachte, elektrische Anbindung zu ermöglichen. Üblicherweise sind die Batteriepole in eine Deckelanordnung der Batteriezelle integriert, die das Zellgehäuse verschließt.

Regulär erfolgt die elektrische Isolation sowie Abdichtung der Batteriepole gegenüber einem Durchbruch in der Deckelanordnung durch eine elektrisch nicht leitende Vergussmasse, die flüssig verarbeitet und nachfolgend durch chemische Prozesse ausgehärtet ist. Beispielsweise sind für derartige Anwendungen Vergussmassen aus Polyurethan, Silikon oder aus Epoxidharz bekannt. Weiterhin sind Vergussmassen bekannt, die durch Erwärmen verflüssigt und bei Abkühlung erneut aushärten. Hierzu zählen insbesondere Thermoplaste, wie beispielsweise Polypropylen, Polyethylenterephthalat, Polyethylen oder Polyphenylen-sulfid.

Derartige Batteriepole sind mit dem Terminal verbunden, welcher technisch einfach durch den Durchbruch in der Deckelanordnung hindurchragt und mittels der Vergussmasse auch mechanisch an der Deckelanordnung befestigt ist. Nachteilig hierbei ist jedoch, dass die Fixierung in Richtung der Batteriezelle lediglich stoffschlüssig durch die Klebewirkung der Vergussmasse erfolgt, wodurch hier keine höheren mechanischen Lasten, wie diese beispielsweise bei einem Unfall auftreten, aufgenommen werden können.

Die vorliegende Erfindung hat daher die Aufgabe, eine Terminalanordnung, eine Deckelanordnung mit einer Terminalanordnung und ein Verfahren zum Herstellen eines Deckelanordnung zu schaffen, durch welche die Batteriepole mechanisch robuster im mit einem Zelldeckel verbindbar sind. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird eine Terminalgruppe bzw. Terminalbaugruppe bereitgestellt. Die Terminalgruppe weist zumindest einen Kollektor und mindestens einen Batteriepol auf. Entlang einer Höhenrichtung ist zwischen dem mindestens einen Batteriepol und dem Kollektor mindestens ein Verbindungsabschnitt angeordnet. Der Verbindungsabschnitt kann als ein eigenständiges Bauteil und/oder als ein Bestandteil des Kollektors und/oder als ein Bestandteil des Batteriepols ausgestaltet sein. Erfindungsgemäß überragt der mindestens eine Batteriepol entlang einer Breitenrichtung und/oder einer Längenrichtung den mindestens einen Verbindungsabschnitt zumindest bereichsweise.

Durch das zumindest bereichsweise, seitliche Überragen des Batteriepols kann ein seitlicher Überstand erzielt werden, welcher in Zusammenwirken mit einem Zelldeckel einen Überstand ausbilden kann. Diese Maßnahme resultiert nach einem Vergießen der Terminalgruppe mit dem Zelldeckel in einer zusätzlichen Sicherung der Terminalgruppe im Zelldeckel mit Hilfe des Überstands. Bei einer Krafteinwirkung auf die Terminalgruppe von außen in Richtung eines Zellgehäuses kann der Überstand einen Formschluss zwischen dem Batteriepol und dem Zelldeckel formen und die ausgehärtete Vergussmasse verstärken bzw. hinsichtlich einer Zugbelastung entlasten.

Gemäß einem weiteren Aspekt der Erfindung wird eine Batteriezelle bereitgestellt. Die Batteriezelle ist als ein elektrochemischer Speicher, beispielsweise in Form einer Lithiumionen-Batterie ausgestaltet. Die Batteriezelle weist ein Zellgehäuse mit mindestens einem im Zellgehäuse angeordneten Zellstapel auf.

Der zumindest eine, im Zellgehäuse angeordnete, Zellstapel kann eine Vielzahl von Anodenschichten, Kathodenschichten und Separatorschichten aufweisen, die über Zellverbinder mit Kollektoren verbunden sind. Durch die elektrisch leitfähige Verbindung der Batteriepole mit den Kollektoren können die jeweiligen Anodenschichten und Kathodenschichten nach dem Fertigstellen der Batteriezelle elektrisch gekoppelt werden, um ein Laden und Entladen der Batteriezelle zu ermöglichen.

Die Batteriezelle ist zumindest einseitig durch mindestens eine erfindungsgemäße Deckelanordnung verschlossen. In einer vorteilhaften Ausführungsform ist die Batteriezelle an zwei gegenüberliegenden Seiten bzw. Enden durch jeweils eine Deckelanordnung verschlossen, wobei jede der Deckelanordnungen mindestens einen mit jeweils mindestens einem Batteriepol verbundenen Kollektor aufweist.

Gemäß einem weiteren Aspekt der Erfindung wird eine Deckelanordnung zum zumindest bereichsweisen Verschließen eines Zellgehäuses einer Batteriezelle bereitgestellt. Die Deckelanordnung weist mindestens eine im Vorfeld gefertigte, erfindungsgemäße Terminalgruppe auf. Weiterhin ist ein Zelldeckel mit mindestens einer Öffnung vorgesehen. Die mindestens eine Öffnung weist eine derartige Querschnittsform auf, dass mindestens ein Batteriepol der Terminalgruppe entlang einer Breitenrichtung und/oder entlang einer Längenrichtung zumindest bereichsweise über die Öffnung hinausragt und einen Überstand ausbildet.

Analog hierzu bildet der Kollektor der Terminalgruppe ebenfalls einen Überstand aus, welcher zumindest bereichsweise, seitlich über die Öffnung des Zelldeckels hinausragt.

Seitlich ist beispielsweise als in Breitenrichtung und/oder in Längenrichtung gerichtet zu versehen.

Weiterhin weist die Deckelanordnung mindestens einen Isolator auf, welcher dazu eingerichtet ist, die mindestens eine Terminalgruppe elektrisch gegenüber dem Zelldeckel zu isolieren.

Der Überstand zwischen dem Batteriepol der Terminalgruppe und dem Zelldeckel wird dadurch realisiert, dass der Batteriepol nur durch Verdrehen und/oder Schwenken und/oder Kippen durch die Öffnung hindurch gefädelt werden kann. Nach dem Hindurchführen des Batteriepols durch die Öffnung im Zelldeckel kann die Terminalgruppe durch eine oder mehrere Bewegungen in eine für das Vergießen optimale Position gebracht werden.

Das Einbringen der Terminalgruppe in die Öffnung des Zelldeckels kann somit gemäß dem sogenannten Schlüsselprinzip oder Riegelprinzip erfolgen. Der resultierende Überstand bzw. Hinterschnitt zwischen der vorgefertigten Terminalgruppe und dem Zelldeckel erhöht die Festigkeit der Deckelanordnung und ermöglicht einen Formschluss entlang der Höhenrichtung beidseitig des Zelldeckels. Somit erfolgt nach dem Ausguss des Spaltes zwischen dem Zelldeckel und der Terminalgruppe die Fixierung in allen Raumachsen auch mittels Formschluss, was die mechanische Festigkeit und Crashbeständigkeit erhöht.

Bei einem Ausführungsbeispiel der Terminalgruppe sind der Kollektor und der mindestens eine Batteriepol und der mindestens eine Verbindungsabschnitt stoffschlüssig, insbesondere durch Schweißen, Löten und/oder Nieten, zu einer einteiligen Komponente verbunden. Durch diese Maßnahme entsteht eine vorgefügte Terminalbaugruppe, die einteilig bzw. integral ausgestaltet ist und somit wie eine Komponente fungiert. Hierdurch kann die weitere Verwendung der Terminalbaugruppe bei der Herstellung von Batteriezellen vereinfacht werden. Darüber hinaus ergibt sich eine besonders einfache Montage der Deckelanordnung bzw. Zelldeckelbaugruppe.

Nach einer weiteren Ausführungsform ist entlang einer Höhenrichtung zwischen dem Zelldeckel und einem Kollektor der Terminalgruppe ein Isolator in Form einer Platte angeordnet. Vorteilhafterweise ragt ein Verbindungsabschnitt der Terminalgruppe und/oder der Batteriepol zumindest bereichsweise durch den Isolator hindurch. Durch die Verwendung des Isolators in plattenform kann die Montage der Deckelanordnung vereinfacht werden. Insbesondere kann durch die Verwendung eines derartigen Isolators die Terminalgruppe gegen den Zelldeckel gepresst werden.

Weiterhin kann das Einbringen einer Vergussmasse in einen Spalt zwischen der Terminalgruppe und dem Zelldeckel vereinfacht werden, wenn der plattenförmige Isolator die Öffnung und den Spalt bodenseitig bzw. einseitig abdichtet.

Die Terminalgruppe kann technisch besonders einfach in der Öffnung arretiert werden, wenn die in einer Endposition in der mindestens einen Öffnung angeordnete Terminalgruppe zumindest bereichsweise durch einen als ausgehärtete Vergussmasse ausgestalteten Isolator elektrisch gegenüber dem Zelldeckel isoliert ist.

Gemäß einem weiteren Ausführungsbeispiel weist die mindestens eine Öffnung des Zelldeckels eine zumindest bereichsweise spitz zulaufende Querschnittsform und/oder eine Querschnittsform mit einer quer zur Längsrichtung ausgerichteten Schräge auf. Eine derartige Öffnung kann beispielsweise durch ein Verdrehen einer dreieckigen oder viereckigen oder einer beliebigen vieleckigen Form entlang der Höhenrichtung bzw. Höhenachse realisiert werden.

Vorteilhafterweise kann die Querschnittsform der Öffnung einer Querschnittsform des Batteriepols oder des Kollektors entsprechen, jedoch um einen Winkel entlang der Höhenachse verdreht sein. Insbesondere weist die mindestens eine Öffnung des Zelldeckels eine dem Batteriepol korrespondierende Querschnittsform auf, welche um einen Winkel gegenüber einer Querschnittsform des Batteriepols in einer Endposition verdreht ist. Durch diese Maßnahme kann die Terminalgruppe mit dem Batteriepol voraus durch die Öffnung hindurch gefädelt bzw. geschoben und anschließend durch Verdrehen in eine Endposition gebracht werden. Durch das finale Verdrehen der Terminalgruppe entstehen Überstände zwischen dem Batteriepol und dem Zelldeckel, die zur Erhöhung der Festigkeit der Deckelanordnung beitragen.

Nach einer weiteren Ausführungsform ist zu der Öffnung benachbart mindestens ein Steg ausgebildet. Der Steg kann hierbei ein Abschnitt des Zelldeckels sein. Je nach Ausgestaltung kann der Steg in seiner Tiefe gegenüber dem restlichen Zelldeckel abgesetzt sein bzw. in einer Vertiefung liegen.

Die Terminalgruppe kann besonders effizient durch die Vergussmasse in den Zelldeckel integriert werden, wenn im Bereich der Öffnung eine Vertiefung zum zumindest bereichsweisen Aufnehmen des Batteriepols und/oder des Isolators ausgebildet ist. Dabei kann für das Applizieren der aushärtenden Vergussmasse ein Bereitstellen von zusätzlichen Formen oder Begrenzungen entfallen, da die Vertiefung zur lokalen Positionierung der noch flüssigen Vergussmasse fungieren kann.

Gemäß einem weiteren Ausführungsbeispiel ist der mindestens eine Überstand in Form von mindestens einem Überlappungsbereich zwischen dem Batteriepol und dem Zelldeckel im Bereich der Öffnung ausbildet. Hierdurch kann der mindestens eine Überlappungsbereich als eine Zug- oder Druckentlastung für den Isolator in Form der ausgehärteten Vergussmasse dienen, wodurch die Batteriezelle im Bereich der Deckelanordnung mechanisch robuster ausgestaltet ist.

Nach einem weiteren Aspekt der Erfindung wird ein Verfahren zum Herstellen einer erfindungsgemäßen Deckelanordnung bereitgestellt. In einem Schritt werden ein Zelldeckel mit mindestens einer Öffnung und eine im Vorfeld gefertigte Terminalgruppe bereitgestellt. Anschließend wird die Terminalgruppe gegenüber dem Zelldeckel gekippt und/oder gedreht und/oder verschoben. In einem weiteren Schritt wird der zumindest eine Batteriepol der Terminalgruppe durch die Öffnung des Zelldeckels hindurch geschoben. In einem anschließenden Schritt werden nach dem Hindurchschieben des Batteriepols die Terminalgruppe und der Zelldeckel zueinander ausgerichtet und miteinander verbunden werden.

Bedingt durch Unterschiede in einer relativen Orientierung der Terminalgruppe zu dem Zelldeckel für das Hindurchschieben des Batteriepols durch die Öffnung des Zelldeckels und der Endposition der Terminalgruppe entsteht in der Endposition der Terminalgruppe zur Erhöhung der Festigkeit mindestens ein Hinterschnitt bzw. Überlapp. Diese Maßnahme gewährleistet auch bei einer untypischen oder unerwarteten Belastung des Batteriepols, in Form einer in die Batteriezelle hinein gerichteten Krafteinwirkung, einen sicheren Halt der Terminalgruppe in dem Zelldeckel.

Gemäß einem Ausführungsbeispiel werden der Zelldeckel und die Terminalgruppe durch zumindest bereichsweises Einbringen und Aushärten von einer Vergussmasse und/oder durch Umformen miteinander verbunden. Hierdurch kann die Terminalgruppe technisch besonders einfach gegenüber dem Zelldeckel isoliert werden.

Die Endposition der Terminalgruppe kann besonders platzsparend ausgestaltet sein, wenn der Zelldeckel und die Terminalgruppe derart zueinander ausgerichtet werden, dass mindestens eine Kante des Zelldeckels zu mindestens einer Kante der Terminalgruppe fluchtend und/oder parallel ausgerichtet ist.

Ein Überstand zwischen dem Batteriepol und dem Zelldeckel kann eingestellt werden, wenn die Terminalgruppe gegenüber dem Zelldeckel und gegenüber einer Isolatorplatte gekippt und/oder gedreht und/oder verschoben wird und anschließend zumindest ein Batteriepol der Terminalgruppe durch eine Öffnung der Isolatorplatte und durch die Öffnung des Zelldeckels hindurch geschoben wird.

Nachstehend werden mehrere Ausführungsbeispiele der Erfindung anhand der Zeichnungen näher erläutert. Es zeigen:
Fig. 1-7 Darstellungen zum Veranschaulichen einer Herstellung einer Deckelanordnung gemäß einer ersten Ausführungsform der Erfindung,
Fig. 8-12 Darstellungen zum Veranschaulichen einer Herstellung einer Deckelanordnung gemäß einer zweiten Ausführungsform der Erfindung,
Fig. 13 Schnittdarstellungen zum Veranschaulichen einer Herstellung einer Deckelanordnung gemäß einer dritten Ausführungsform der Erfindung, und
Fig. 14 perspektivische Darstellungen zum Veranschaulichen einer Batteriezelle gemäß einer Ausführungsform der Erfindung mit einer erfindungsgemäßen Deckelanordnung.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

Der Aufbau einer Deckelanordnung gemäß dem Stand der Technik wird im Folgenden beschrieben, um die Nachteile an der Lösung des Stands der Technik zu veranschaulichen. Beim Aufbau einer Deckelanordnung gemäß dem Stand der Technik Wird eine Isolatorplatte derart auf eine Terminalgruppe derart gelegt, dass ein Batteriepol der Terminalgruppe 10 durch eine Öffnung in der Isolatorplatte hindurchragt.

Anschließend wird ein Zelldeckel auf die Isolatorplatte aufgesetzt, wobei der Zelldeckel eine Öffnung mit einer quadratischen Querschnittsform aufweist, die einer Querschnittsform des Batteriepols entspricht. Somit ragt der Batteriepol der Terminalgruppe durch die Öffnung der Isolatorplatte und durch die Öffnung des Zelldeckels hindurch. Der Batteriepol der Terminalgruppe wird durch ein entsprechendes, im Zelldeckel eingebrachtes, Loch geschoben, bis der Kollektor auf der Isolierplatte aufsitzt, die zwischen einer Deckelunterseite des Zelldeckels und dem Kollektor angeordnet ist.

Wenn die Terminalgruppe, die aus dem Batteriepol, welcher durch die Öffnung im Zelldeckel hindurchragt, sowie in Richtung des Innenvolumens des Zellgehäuses in einen Kollektor, an welchen später zellseitig unbeschichtete Enden bzw. sogenannte Zellverbinder der Anoden- und Kathodenfolien des Elektrodenstapels bzw. Zellstapels geschweißt werden, besteht, bereits vorab gefügt wird, ergibt sich eine besonders einfache Montage der Deckelanordnung.

In einem weiteren Schritt gemäß dem Stand der Technik wird ein Spalt zwischen dem Zelldeckel und dem Batteriepol mit einer Vergussmasse gefüllt. Der Spalt ergibt sich aufgrund einer Überdimensionierung der Öffnung im Zelldeckel und je nach Ausgestaltung auch aufgrund einer Überdimensionierung der Öffnung in der Isolatorplatte.

Nach dem Aushärten der Vergussmasse wird eine stoffschlüssige Verbindung hergestellt, die die Komponenten zu einer Deckelanordnung verbindet. Die Vergussmasse wird durch die zwischen dem Zelldeckel und dem Kollektor verpresste Isolierplatte am Herauslaufen bzw. aus dem Spalt Entweichen gehindert.

Die Deckelanordnung gemäß dem Stand der Technik verschließt ein Zellgehäuse, wobei der Batteriepol eine außenseitige elektrische Schnittstelle bildet. Der übrige Teil der Terminalgruppe und die Isolatorplatte sind in einem Innenvolumen des Zellgehäuses angeordnet.

Wird beispielsweise eine Krafteinwirkung auf den Batteriepol gemäß dem Stand der Technik ausgeübt, welche in das Innenvolumen des Zellgehäuses gerichtet ist, erfolgt die Aufnahme dieser Krafteinwirkung ausschließlich durch die Klebewirkung der Vergussmasse. Die Klebewirkung der Vergussmasse ist hinsichtlich der Aufnahme von Kräften begrenzt und kann, beispielsweise bei einem Unfall, versagen. Durch ein Versagen der Vergussmasse wird die Terminalgruppe aus der Deckelanordnung gerissen oder gebrochen und in das Innenvolumen des Zellgehäuses geschoben, sodass das im Innenvolumen des Zellgehäuses gefülltes Elektrolyt aus dem Zellgehäuse entweichen kann.

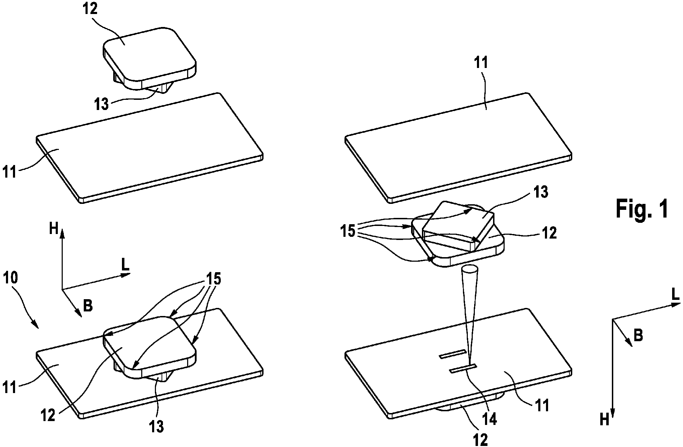

In den Fig. 1 bis Fig. 14 sind beispielhafte Ausführungsformen zum Veranschaulichen der Erfindung gezeigt.

Die Fig. 1 - Fig. 7 zeigen Darstellungen zum Veranschaulichen einer Herstellung einer Deckelanordnung 20 gemäß einer ersten Ausführungsform der Erfindung. Hierbei zeigt die Fig. 1 beispielhafte Schritte zum Herstellen einer erfindungsgemäßen Terminalgruppe 10 gemäß einem ersten Ausführungsbeispiel.

Im dargestellten Ausführungsbeispiel weist die Terminalgruppe 10 einen Kollektor 11 und einen Batteriepol 12 auf. Entlang einer Höhenrichtung H ist zwischen dem Batteriepol 12 und dem Kollektor 11 mindestens ein Verbindungsabschnitt 13 angeordnet.

Der Verbindungsabschnitt 13 kann als ein eigenständiges Bauteil und/oder als ein Bestandteil des Kollektors 11 und/oder als ein Bestandteil des Batteriepols 12 ausgestaltet sein. Beispielhaft ist der Verbindungsabschnitt 13 als ein Bestandteil bzw. als eine Verlängerung des Batteriepols 12 in Höhenrichtung H gezeigt.

Der Batteriepol 12 überragt im ersten Ausführungsbeispiel den Verbindungsabschnitt 13 entlang einer Breitenrichtung B und einer Längenrichtung L bereichsweise.

Die Terminalgruppe 10 ist vorteilhafterweise vorgefertigt. Hierfür sind der Kollektor 11, der Batteriepol 12 und der Verbindungsabschnitt 13 zu einer einteiligen Komponente, der Term inalgruppe 10, verbunden. Beispielhaft sind der Kollektor 11, der Batteriepol 12 und der Verbindungsabschnitt 13 durch Schweißverbindungen 14 miteinander verbunden.

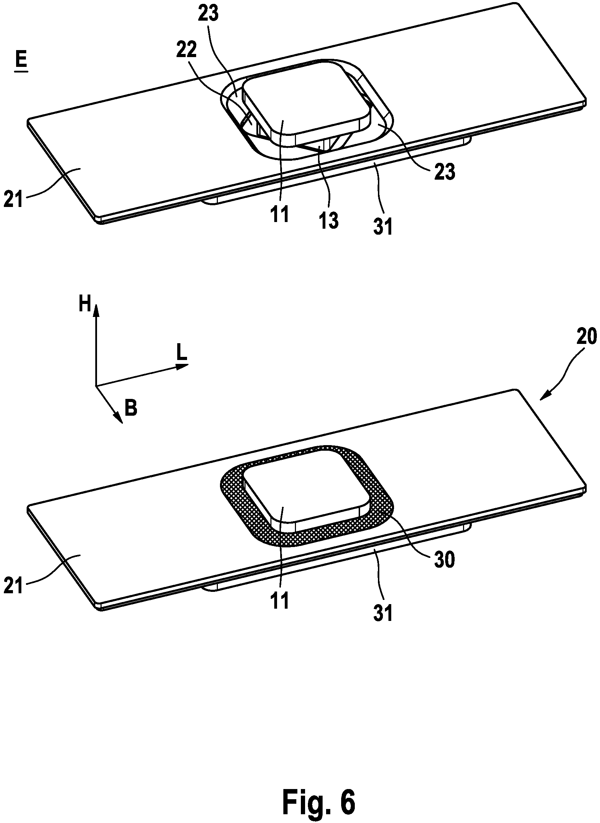

Durch das zumindest bereichsweise Überragen des Batteriepols 12 entlang der Breitenrichtung B und der Längenrichtung L entstehen Überstände 15, die bei der Herstellung der Deckelanordnung 20 als zusätzliche, formschlüssige Verstärkungen oder Versteifungen der, in Fig. 6 gezeigten, Vergussmasse 30 fungieren.

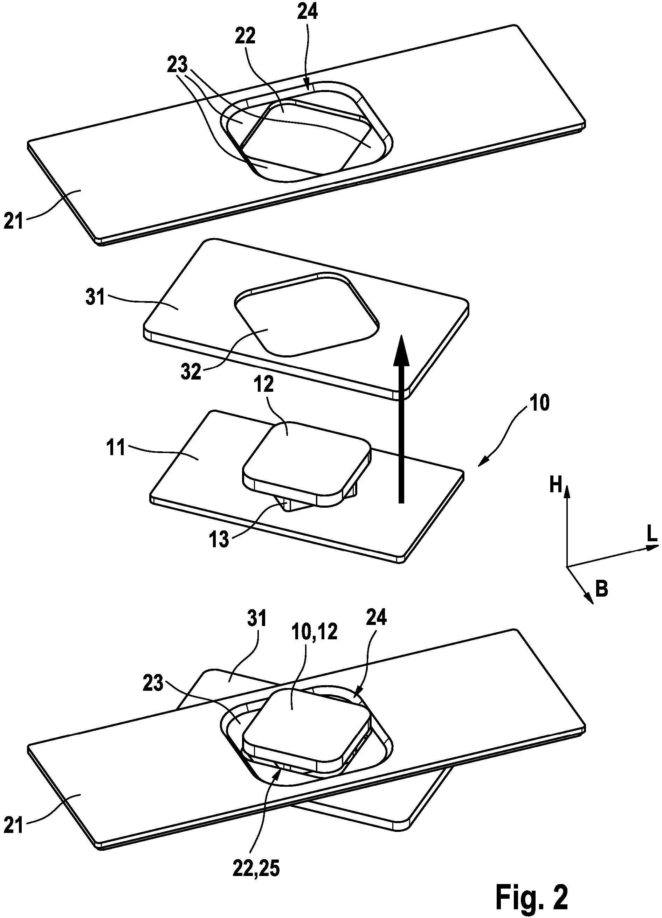

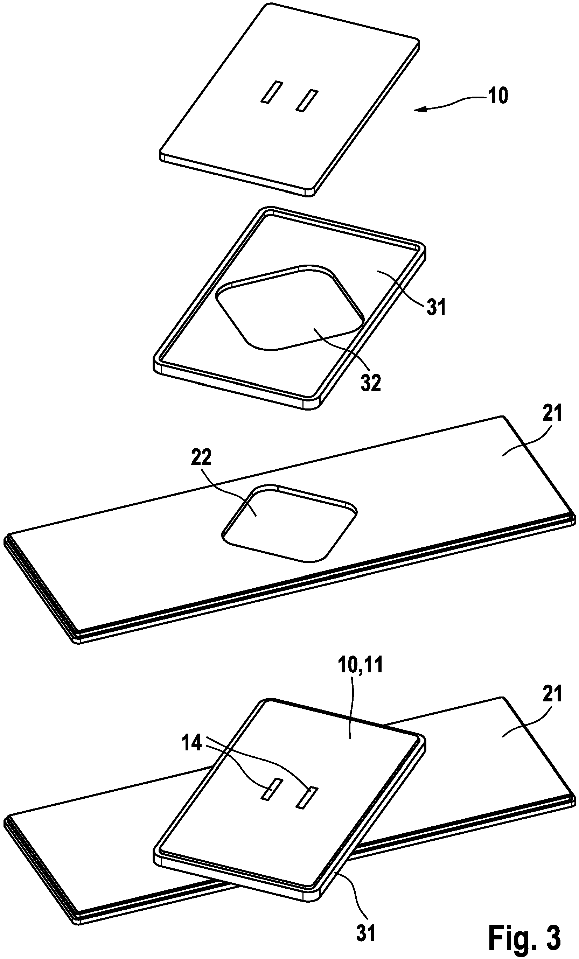

Die Fig. 2 zeigt eine Montage der in Fig. 1 vorgefertigten Terminalgruppe 10 zum Herstellen einer Deckelanordnung 20. Bei der Deckelanordnung 20 wird ein Hinterschnitt bzw. Überstand 15 durch Verdrehung der Terminalgruppe 10 gegenüber einem Zelldeckel 21 nach einem sogenannten Schlüsselprinzip erzeugt. Zur Veranschaulichung der Montage sind die in Fig. 2 gezeigten Schritte in Fig. 3 aus einer abweichenden Perspektive dargestellt.

Da die Deckelbaugruppe bzw. Deckelanordnung 20 für eine Batteriezelle 100 in Form einer prismatischen Hardcase-Zelle vorgesehen ist, deren Batteriepole 12 in jeweils einer Deckelanordnung 20 an zwei einander gegenüberliegenden Schmalseiten angeordnet sind, ist pro Deckelanordnung 20 beispielhaft nur eine Terminalgruppe 10 vorgesehen.

Die Fügung der Komponenten 11, 12, 13 der Terminalgruppe 10 erfolgt, wie in Fig. 1 gezeigt, vor der Montage der Deckelanordnung 20 durch Verschweißung. An einer Terminalgruppe 10 zum Ausbilden eines Pluspols ist der Kollektor 11 aus Aluminium und bei einer Terminalgruppe 10 zum Ausbilden eines Minuspols ist der Kollektor 11 aus Kupfer hergestellt.

Der Verbindungsabschnitt 13 und der Batteriepol 12 können aus einem gleichen Material bestehen, welcher dem Material des Kollektors 11 gleicht oder sich vom Material des Kollektors 11 unterscheidet.

Die Deckelanordnung 20 weist einen Zelldeckel 21 auf, welcher mit mindestens einem Durchbruch bzw. Öffnung 22 versehen ist.

Die Öffnung 22 weist eine quadratische Querschnittsform auf, welche im Wesentlichen einer Querschnittsform des Batteriepols 12 der Terminalgruppe 10 entspricht, jedoch um 45° entlang einer Höhenachse H verdreht ist. Hierdurch werden im Bereich der Öffnung 22 vier nach innen ragende dreieckförmige Stege 23 ausgebildet. Die Stege 23 liegen in einer Vertiefung 24, die in Höhenrichtung H gerichtet ist.

Die Vertiefung 24 kann durch eine lokale Verformung des Zelldeckels 21 entlang der Höhenrichtung H und/oder durch eine Reduzierung der Materialstärke des Zelldeckels 21 entlang der Höhenrichtung H realisiert sein.

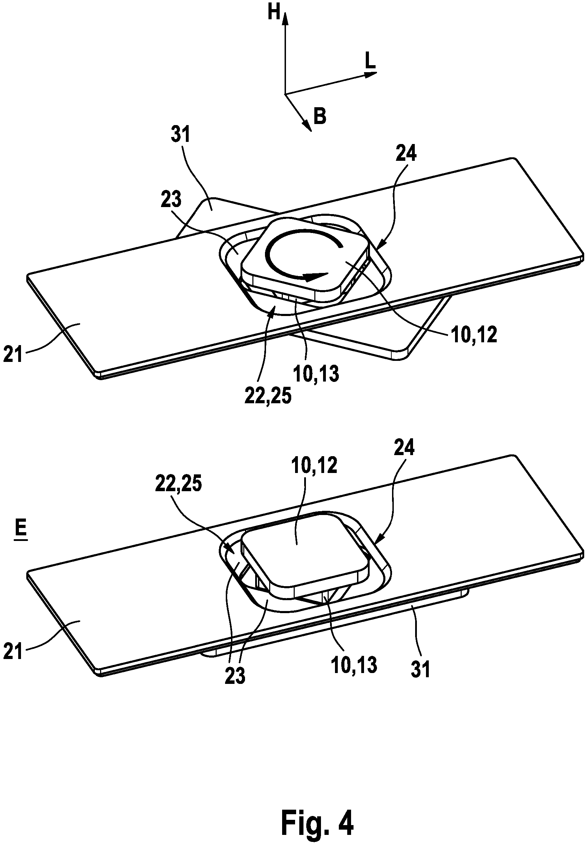

Die Vertiefung 24 weist eine Ausrichtung und eine Querschnittsform auf, welche im Wesentlichen einer Ausrichtung und einer Querschnittsform des Batteriepols 12 in einer Endstellung E entspricht. Die Einstellung der Endstellung E der Terminalgruppe 10 relativ zum Zelldeckel 21 ist schematisch in Fig. 4 gezeigt.

Die um 45° verdrehte Öffnung 22 wird im Folgenden dazu genutzt, den Batteriepol 12 der Terminalanordnung 10 hindurchzuführen. Hierzu wird die Terminalgruppe 10 um einen Winkel von 45° relativ zum Zelldeckel 21 entlang der Höhenachse der Höhenrichtung H verdreht.

Zwischen dem Zelledeckel 21 und dem Kollektor 11 der Terminalanordnung 10 wird ein Isolator in Form einer Isolatorplatte 31 eingesetzt. Die Isolatorplatte 31 weist ebenfalls eine Öffnung 32 auf. Die Öffnung 32 der Isolatorplatte 31 ist im dargestellten Ausführungsbeispiel identisch zur Öffnung 22 im Zelldeckel 21 dimensioniert und ausgerichtet. Somit kann der Batteriepol 11 der Terminalgruppe 10 nach der 45° Drehung durch die Öffnung 32 der Isolatorplatte 31 und durch die Öffnung 22 des Zelldeckels 21 hindurch geführt werden.

Die Terminalgruppe 10 wird derart entlang der Höhenrichtung H durch die Öffnung 32 der Isolatorplatte 31 und durch die Öffnung 22 des Zelldeckels 21 hindurch geführt, bis die Isolatorplatte 31 zwischen dem Zelldeckel 21 und dem Kollektor 11 der Terminalgruppe 10 eingeklemmt ist. Hierdurch liegt Isolatorplatte 31 formschlüssig an dem Zelldeckel 21 und am Kollektor 11 auf.

Die Fig. 4 zeigt einen weiteren Schritt, bei dem die Terminalgruppe 10 zusammen mit der Isolatorplatte 31 nach dem Durchfädeln des Batteriepols 12 durch die Öffnung 22 im Zelldeckel 21 um weitere 45° gedreht wird. Der Pfeil veranschaulicht die Drehbewegung. Für diesen Schritt ist der Verbindungsabschnitt 13 zwischen dem Batteriepol 12 und dem Kollektor 11 derart dimensioniert, dass dieser zumindest in der Öffnung 22 des Zelldeckels 21 frei bzw. ungehindert rotieren kann.

Ein Abrunden von Ecken und Kanten des Batteriepols 12 und/oder des Verbindungsabschnitts 13 kann ebenfalls ein Rotieren innerhalb der Öffnung 22 des Zelldeckels 21 und innerhalb der Vertiefung 24 vereinfachen oder zumindest ermöglichen. Die Drehung der Terminalgruppe 10 um die weiteren 45° bringen die Terminalgruppe 10 in eine Endstellung E.

Nach der Drehung der Terminalgruppe 10 um weitere 45°, gelangen die in der Vertiefung 24 ausgebildeten, überkragenden Stege 23 mit den Überständen 15 der Terminalgruppe 10 in Überdeckung. Hierdurch entstehen Überstände bzw. Hinterschnitte zur Erhöhung der Festigkeit der Deckelanordnung 20.

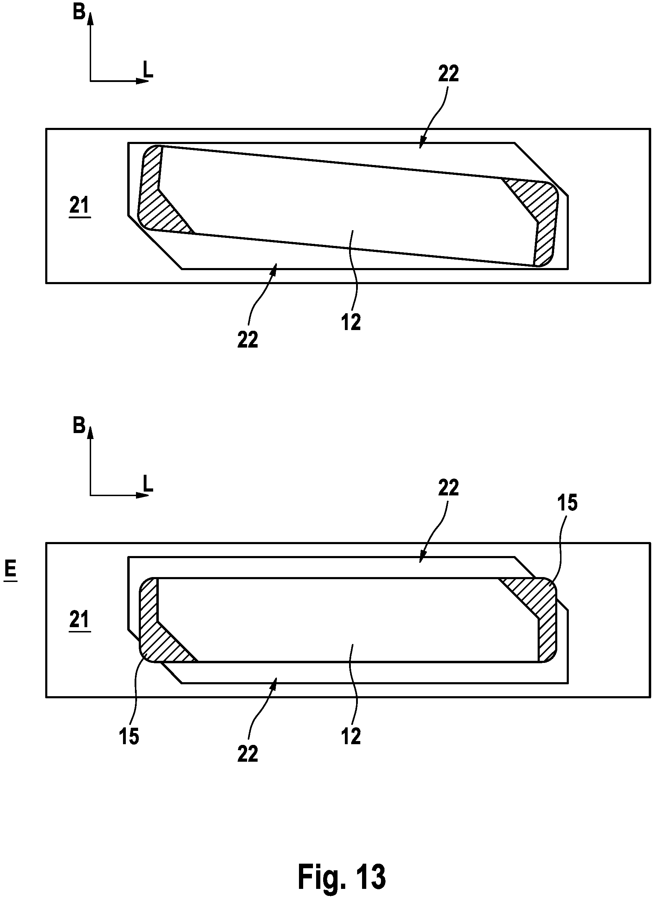

Im dargestellten Ausführungsbeispiel werden in der Endstellung E der Terminalgruppe 10 an allen vier Ecken Überstände 15 ausgebildet. Je nach Ausgestaltung können jedoch bereits Überstände 15 an zwei Ecken ausreichen. Eine derartige Ausgestaltung ist im dritten Ausführungsbeispiel in Fig. 13 schematisch dargestellt.

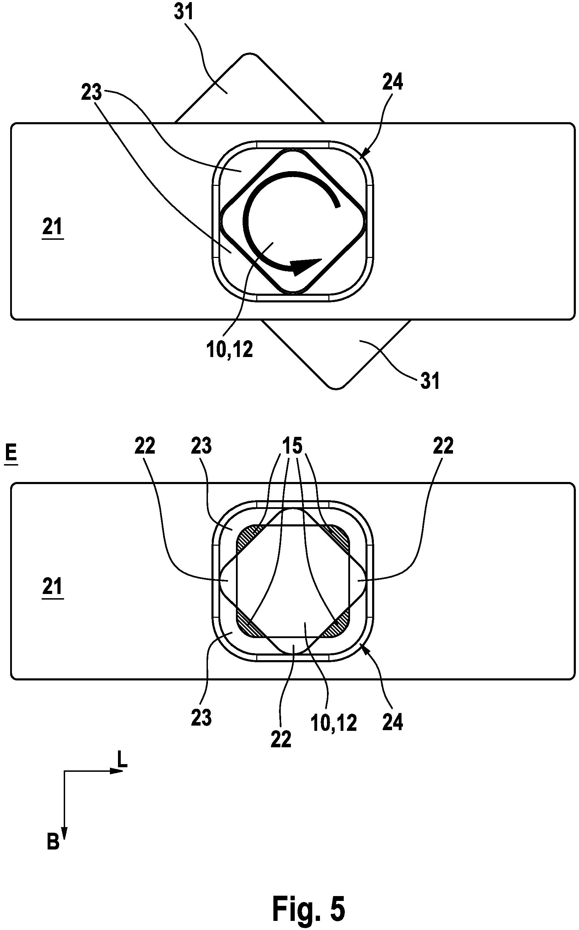

Die Fig. 5 zeigt Draufsichten zum Einstellen der Überstände 15 zwischen dem Batteriepol 12 und den Stegen 23 des Zelldeckels 21 durch ein Verdrehen der Terminalanordnung in die Endstellung E.

Nach dem Einstellen der Endposition E der Terminalgruppe 10 kann von einer Oberseite des Zelldeckels 21 aus eine Vergussmasse 30 in einen Spalt 25 zwischen dem Zelldeckel 21 und der Terminalgruppe 10 eingebracht werden.

Die Vergussmasse 30 wird durch die zwischen dem Zelldeckel 21 und dem Kollektor 11 verpresste Isolierplatte 31 am Herauslaufen gehindert. Somit wird eine Gussform für die Vergussmasse 30 durch ein Zusammenwirken des Zelldeckels 21, der Isolierplatte 31 und dem Kollektor 11 gebildet. In der Fig. 6 ist der letzte Schritt zum Herstellen der Deckelanordnung 20 gezeigt, bei dem die Vergussmasse 30 in den Spalt 25 eingebracht und ausgehärtet ist.

Durch die ausgebildeten Überstände 15 wird nach dem Vergießen der Terminalgruppe 10 mit dem Zelldeckel 21 die Festigkeit der Terminalgruppe 10 innerhalb der Deckelanordnung 10 erhöht. Die Überstände 15 bilden einen Formschluss entlang der Höhenrichtung H aus, sodass bei einer auf den Batteriepol 12 wirkenden Kraft die Klebewirkung der ausgehärteten Vergussmasse 30 durch die Überstände 15 entlastet und/oder gestützt wird.

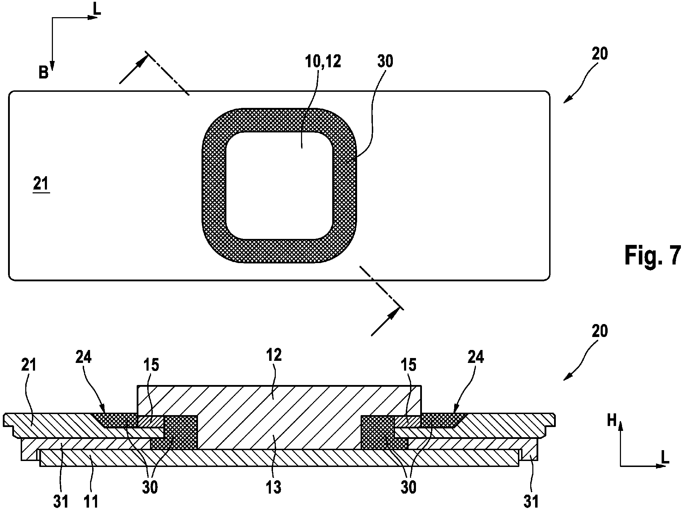

In der Fig. 7 ist ein Querschnitt gezeigt, um die verstärkende Wirkung der Überstände 15 in der hergestellten Deckelanordnung 10 zu verdeutlichen.

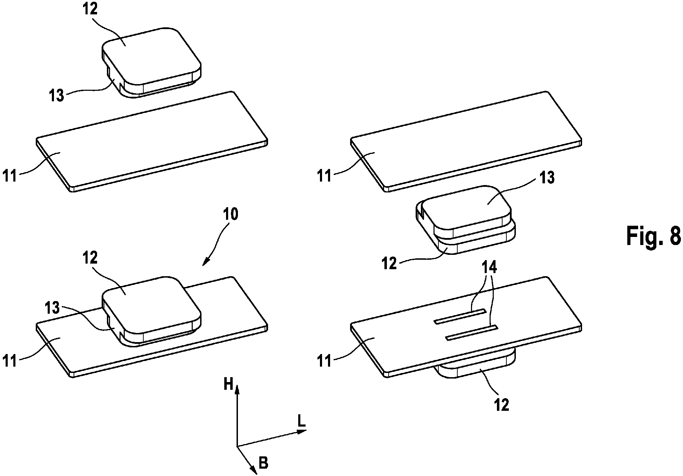

Die Fig. 8 - Fig. 12 zeigen Darstellungen zum Veranschaulichen einer Herstellung einer Deckelanordnung 20 gemäß einer zweiten Ausführungsform der Erfindung. Die Fig. 8 zeigt beispielhafte Schritte zum Herstellen einer erfindungsgemäßen Terminalgruppe 10 gemäß einem zweiten Ausführungsbeispiel.

Im dargestellten Ausführungsbeispiel weist die Terminalgruppe 10 einen Kollektor 11 und einen Batteriepol 12 auf. Entlang einer Höhenrichtung H ist zwischen dem Batteriepol 12 und dem Kollektor 11 mindestens ein Verbindungsabschnitt 13 angeordnet, welcher als eine Verlängerung des Batteriepols 12 in Höhenrichtung H ausgestaltet ist.

Der Batteriepol 12 überragt im zweiten Ausführungsbeispiel den Verbindungsabschnitt 13 entlang der Breitenrichtung B. Hierbei überragt der Batteriepol 12 den Verbindungsabschnitt 13 beidseitig entlang einer gesamten Ausdehnung entlang der Längenrichtung L.

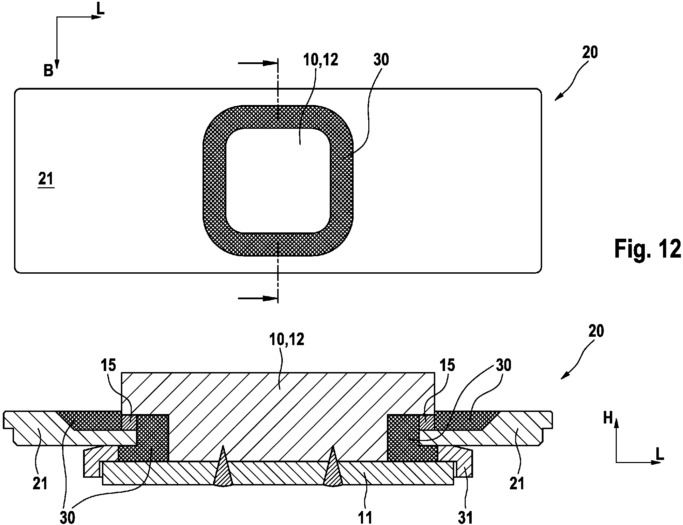

Durch das zumindest bereichsweise Überragen des Batteriepols 12 entlang der Breitenrichtung B entstehen in Fig. 12 gezeigte, Überstände 15, die bei der Herstellung der Deckelanordnung 20 als zusätzliche, formschlüssige Verstärkungen oder Versteifungen der Vergussmasse 30 fungieren.

Die Terminalgruppe 10 ist analog zum ersten Ausführungsbeispiel vorgefertigt ausgeführt. Hierfür sind der Kollektor 11, der Batteriepol 12 und der Verbindungsabschnitt 13 durch Schweißverbindungen 14 zu einer einteiligen Komponente, der Terminalgruppe 10, verbunden.

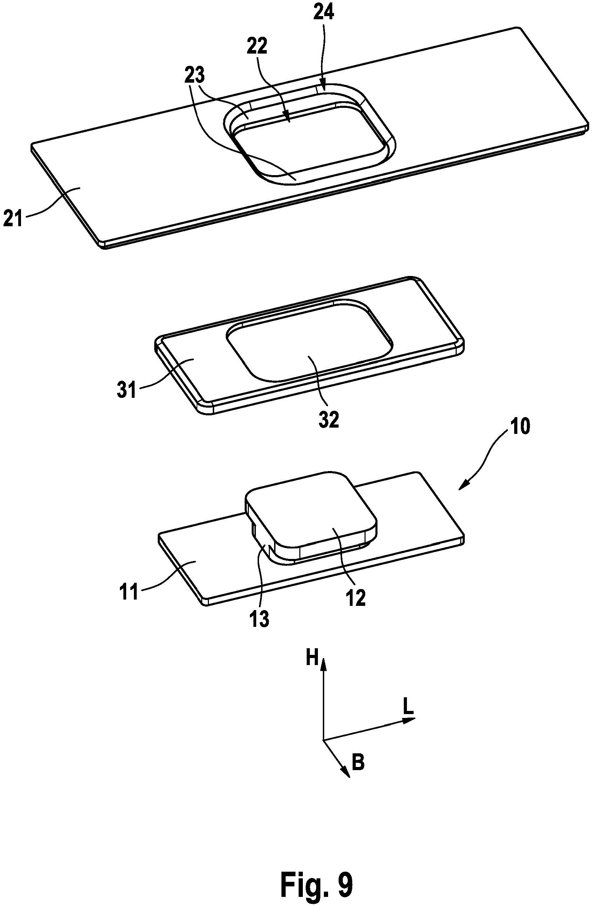

Die Fig. 9 zeigt eine Montage der in Fig. 8 vorgefertigten Terminalgruppe 10 zum Herstellen einer Deckelanordnung 20. Im Unterschied zum ersten Ausführungsbeispiel, wird beim zweiten Ausführungsbeispiel die Terminalgruppe 10 um eine Längsachse der Längenrichtung L gedreht bzw. gekippt, um den Batteriepol 12 durch die Öffnung 22 in dem Zelldeckel 21 führen zu können.

Analog zum ersten Ausführungsbeispiel wird eine Isolation in Form einer Isolierplatte 31 mit einer Öffnung 32 verwendet, um die Terminalgruppe 10 gegenüber dem Zelldeckel 21 elektrisch zu isolieren und eine Gussform für die Vergussmasse 30 auszubilden.

Der quadratische Durchbruch bzw. Öffnung 22 im Zelldeckel 21 ist im unteren Bereich an zwei gegen-überliegenden Seiten mit nach innen ragenden rechteckigen Stegen 23 versehen, welche eine Öffnung 22 mit einer rechteckigen Querschnittsform freilassen. Durch diese Öffnung 22 kann der Batteriepol 12 der Terminalgruppe 10 durch Verdrehung und Verschiebung gefädelt werden.

Die Öffnung 22 kann dabei eine Ausdehnung entlang der Längenrichtung L entsprechend einer Ausdehnung des Batteriepols 12 aufweisen. Entlang der Breitenrichtung B weist die Öffnung 22 eine Ausdehnung auf, welche im Wesentlichen einer Ausdehnung des Verbindungsabschnitts 13 zuzüglich einer Ausdehnung eines Überstands des Batteriepols 12 entlang der Breitenrichtung entspricht.

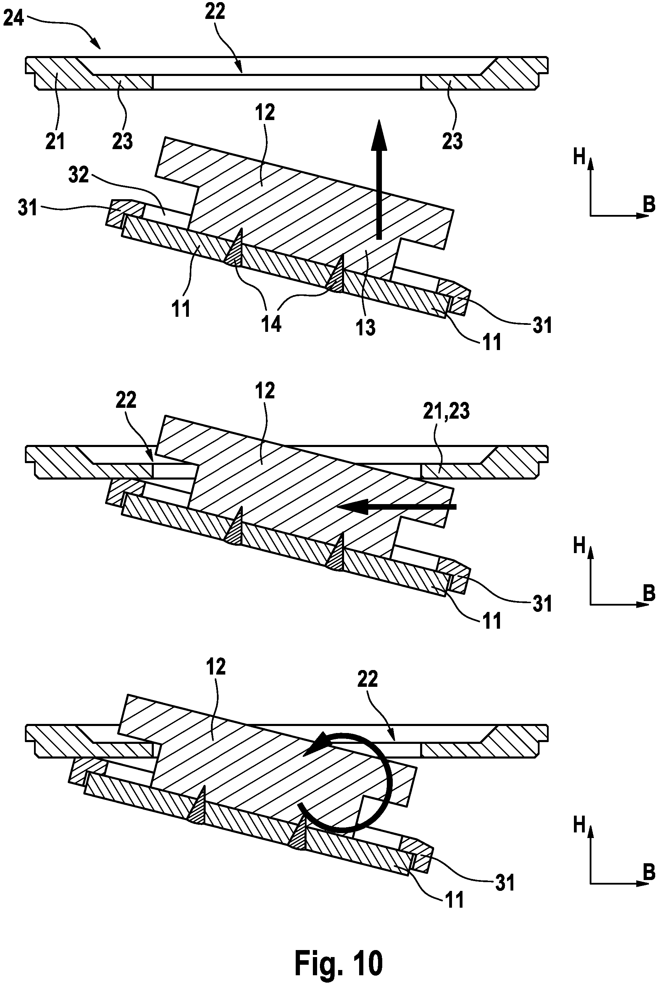

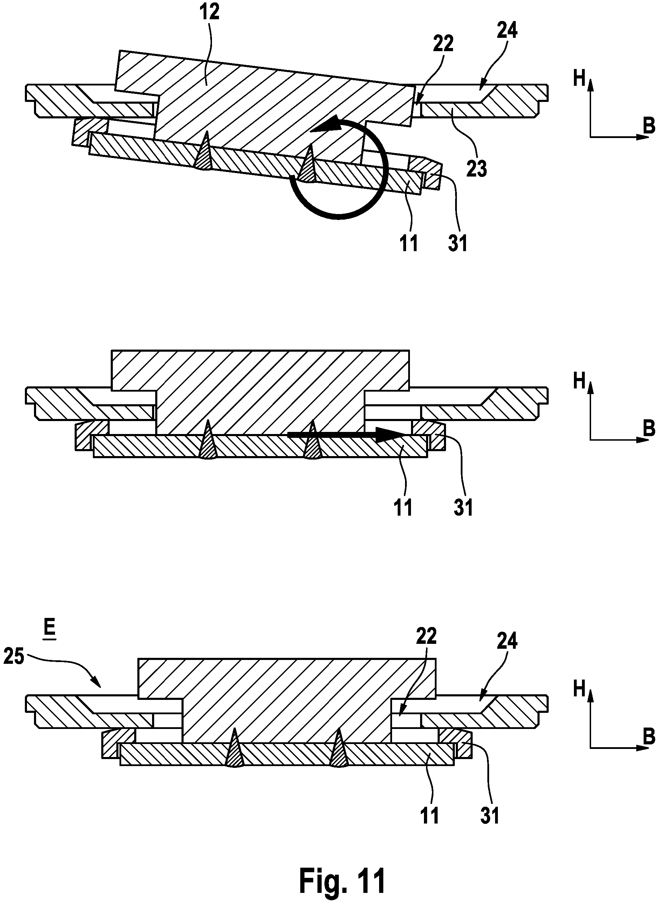

Die Fig. 10 und Fig. 11 veranschaulichen mögliche Schritte, um den Batteriepol 12 durch die Öffnung 22 im Zelldeckel 21 hindurchzuführen. Dieser Vorgang kann in mehreren Schritten erfolgen, die ein einmaliges oder ein mehrmaliges, relatives Verschieden der Terminalgruppe 10 entlang der Breitenrichtung B und entlang der Höhenrichtung H und/oder Schwenken der Terminalgruppe 10 entlang der Längenachse der Längsrichtung L, umfassen.

Ein derartiges Durchführen des Batteriepols 12 durch die Öffnung 22 im Zelldeckel 21 erfolgt gemäß dem sogenannten Riegelprinzip. Dabei erfolgt nach dem Durchführen des Batteriepols 12 durch die Öffnung 22 entlang der Höhenrichtung H ein Zentrieren des Batteriepols 12 innerhalb der Öffnung 22 des Zelldeckels 21. Dieses Zentrieren erfolgt durch ein Verschieben der Terminalgruppe 10 entlang der Breitenrichtung analog zu einem Verschlussriegel. Eine derartige Zentrierung des Batteriepols 12 ist in der Fig. 11 mittels schematischer Schnittdarstellungen illustriert.

Durch das Zentrieren wird die Terminalgruppe 10 bzw. der Batteriepol 12 in seine Endstellung E gebracht, in welcher ein Einbringen der Vergussmasse 30 möglich ist, um die Terminalgruppe 10 mit dem Zelldeckel 21 zu einer Deckelanordnung 20 zu verbinden.

Nach einem seitlichen Hineinschwenken des Batteriepols 12 in die Öffnung 22 des Zelldeckels 21 in Kombination mit einer Verschiebung der Terminalgruppe 10 in Breitenrichtung B und Höhenrichtung H, gelangen die den Verbindungsabschnitt 13 überkragenden Seitenkanten 23 des Batteriepols 12 in Überdeckung mit den Stegen 23 des Zelldeckels 21 im Bereich der Vertiefung 24 des Zelldeckels 21, wodurch die zur Erhöhung der Festigkeit benötigten Hinterschnitte bzw. Überstände 15 ausgebildet werden.

Die Überstände 15 sind in einer schematischen Schnittdarstellung in der Fig. 12 veranschaulicht. Die Fig. 12 zeigt hierbei eine Deckelanordnung 20, bei der die Terminalgruppe 10 mittels Vergussmasse 30 mit dem Zelldeckel 21 verbunden wurde. Dieser Schritt kann vorzugsweise von einer Oberseite des Zelldeckels 21 aus erfolgen. Dabei wird eine flüssige Vergussmasse 30 in den Spalt 25 zwischen der Öffnung 22 im Zelldeckel 21 und der Terminalgruppe 10 eingebracht, wobei die Vergussmasse 30 durch die zwischen dem Zelldeckel 21 und dem Kollektor 11 verpresste Isolierplatte 31 am Entweichen gehindert wird.

Das zweite Ausführungsbeispiel zeigt zwar eine Öffnung 22 mit einer rechteckigen Querschnittsform, diese dient lediglich der Verdeutlichung des Prinzips. Die Erfindung ist nicht auf diese Formgebung beschränkt. Insbesondere können die Öffnung 22, der Batteriepol 12, der Verbindungsabschnitt 13 und/oder die Stege 23 eine von der Rechteckform abweichenden Querschnittsform aufweisen. Dabei können die Stege 23 und die Überstände 15 an Schmalseiten, Langseiten und/oder Ecken ausgebildet werden. Als mögliche Querschnittsformen können auch runde oder ovale Formen eingesetzt werden.

In der Fig. 13 sind Schnittdarstellungen zum Veranschaulichen einer Herstellung einer Deckelanordnung 20 gemäß einer dritten Ausführungsform der Erfindung gezeigt. Analog zum ersten Ausführungsbeispiel erfolgt das Einsetzen des Batteriepols 12 in die Öffnung 22 im Zelldeckel 21 mit Hilfe einer Rotation entlang der Höhenachse der Höhenrichtung H. Aufgrund der länglich ausgestalteten Querschnittsform der Öffnung 22 und der zwei ausgebildeten Stegen 23 an zwei Ecken im Bereich der Öffnung 22, kann der Batteriepol 12 mit einer geringfügigen Rotation in eine relative Position gebracht werden, welche ein Hindurchschieben des Batteriepols 12 durch die Öffnung 22 des Zelldeckels 21 erlaubt.

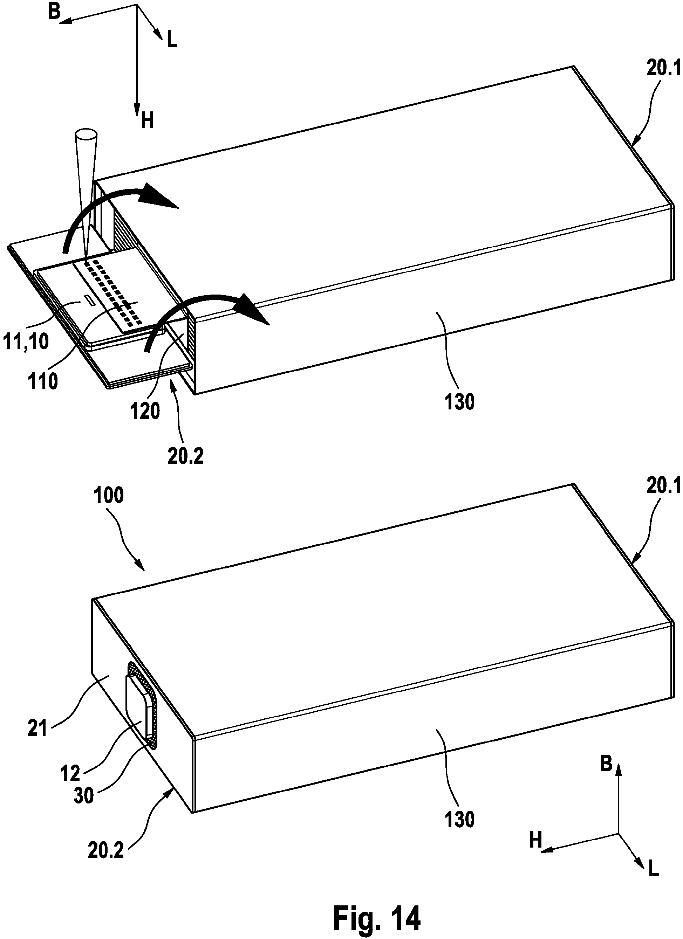

Die Fig. 14 zeigt perspektivische Darstellungen zum Veranschaulichen einer Batteriezelle 100 gemäß einer Ausführungsform der Erfindung mit einer erfindungsgemäßen Deckelanordnung 20.

Bei einem Zusammenbau einer beispielhaft dargestellten Batteriezelle 100 werden zuerst, nicht dargestellte, Zellverbinder von Kathodenschichten eines Zellstapels 120 auf einem als Pluspol ausgestalteten Kollektor einer ersten Deckelanordnung 20.1 geschweißt. Anschließend wird der Zellstapel 120 in ein Zellgehäuse 130 hineingeschoben und einseitig durch die erste Deckelanordnung 20.1 verschlossen. Das Zellgehäuse 130 kann als ein kastenartiger Zellgehäusemantel aus Aluminium ausgestaltet sein.

In einem weiteren Schritt werden Zellverbinder 110 von Anodenschichten mit dem Kollektor 11 der Terminalgruppe 10 einer zweiten Deckelanordnung 20.2 verschweißt. Dies erfolgt technisch besonders einfach auf einer Rückseite des Kollektors 11. Nach einem Verbinden der Zellverbinder 110 mit dem Kollektor 11 kann die zweite Deckelanordnung 20.2 entsprechend den Pfeilen in Richtung des Zellgehäuses 130 um 90° geklappt werden.

Der zumindest eine, im Zellgehäuse 130 angeordnete, Zellstapel 120 kann eine Vielzahl von Anodenschichten, Kathodenschichten und Separatorschichten aufweisen, die über Zellverbinder 110 mit Kollektoren 11 verbunden werden. Durch die elektrisch leitfähige Verbindung der Batteriepole 12 mit den Kollektoren 11 können die jeweiligen Anodenschichten und Kathodenschichten nach dem Fertigstellen der Batteriezelle 100 elektrisch gekoppelt werden, um beispielsweise ein Laden und Entladen der Batteriezelle 100 zu ermöglichen.

Zum Abschluss kann eine Verschweißung der beiden Deckelanordnungen 20.1, 20.2 mit dem Zellgehäuse 130 erfolgen, um das Zellgehäuse 130 fluiddicht abzuschließen. Je nach Ausgestaltung kann bereits ein Elektrolyt eingefüllt sein oder nach dem Verschweißen der beiden Deckelanordnungen 20.1, 20.2 in ein Innenvolumen des Zellgehäuses 130 eingefüllt werden.

## Patentansprüche

1. Terminalgruppe (10), aufweisend zumindest einen Kollektor (11) und mindestens einen Batteriepol (12), wobei entlang einer Höhenrichtung (H) zwischen dem mindestens einen Batteriepol (12) und dem Kollektor (11) mindestens ein Verbindungsabschnitt (13) angeordnet ist, wobei der mindestens eine Batteriepol (12) entlang einer Breitenrichtung (B) und/oder Längenrichtung (L) mindestens einen Verbindungsabschnitt (13) zumindest bereichsweise überragt.

2. Terminalgruppe nach Anspruch 1, wobei der Kollektor (11) und der mindestens eine Batteriepol (12) und der mindestens eine Verbindungsabschnitt (13) stoffschlüssig, insbesondere durch Schweißen, Löten und/oder Nieten, zu einer einteiligen Komponente verbunden sind.

3. Deckelanordnung (20) zum zumindest bereichsweisen Verschließen eines Zellgehäuses (130) einer Batteriezelle (100), aufweisend mindestens eine im Vorfeld gefertigte Terminalgruppe (10) gemäß einem der vorhergehenden Ansprüche, aufweisend einen Zelldeckel (21) mit mindestens einer Öffnung (22), wobei die mindestens eine Öffnung (22) eine derartige Querschnittsform aufweist, dass mindestens ein Batteriepol (12) der Terminalgruppe (10) entlang einer Breitenrichtung (B) und/oder entlang einer Längenrichtung (L) zumindest bereichsweise über die Öffnung (22) hinausragt und einen Überstand (15) ausbildet, und aufweisend mindestens einen Isolator (30, 31), welcher dazu eingerichtet ist, die mindestens eine Terminalgruppe (10) elektrisch gegenüber dem Zelldeckel (21) zu isolieren.

4. Deckelanordnung nach Anspruch 3, wobei entlang einer Höhenrichtung (H) zwischen dem Zelldeckel (21) und einem Kollektor (11) der Terminalgruppe (10) ein Isolator in Form einer Platte (31) angeordnet ist, wobei ein Verbindungsabschnitt (13) der Terminalgruppe (10) und/oder der Batteriepol (12) zumindest bereichsweise durch den Isolator (31) hindurchragt.

5. Deckelanordnung nach Anspruch 3 oder 4, wobei die in einer Endposition (E) in der mindestens einen Öffnung (22) angeordnete Terminalgruppe (10) zumindest bereichsweise durch einen als ausgehärtete Vergussmasse (30) ausgestalteten Isolator elektrisch gegenüber dem Zelldeckel (21) isoliert ist.

6. Deckelanordnung nach einem der Ansprüche 3 bis 5, wobei die mindestens eine Öffnung (22) des Zelldeckels (21) eine zumindest bereichsweise spitz zulaufende Querschnittsform und/oder eine Querschnittsform mit einer quer zur Längsrichtung (L) ausgerichteten Schräge (23) aufweist.

7. Deckelanordnung nach einem der Ansprüche 3 bis 6, wobei die mindestens eine Öffnung (22) des Zelldeckels (21) eine dem Batteriepol (12) korrespondierende Querschnittsform aufweist, welche um einen Winkel gegenüber einer Querschnittsform des Batteriepols (12) in einer Endposition (E) verdreht ist.

8. Deckelanordnung nach Anspruch 7, wobei zu der Öffnung (22) benachbart mindestens ein Steg (23) ausgebildet ist.

9. Deckelanordnung nach einem der Ansprüche 3 bis 8, wobei im Bereich der Öffnung (22) eine Vertiefung (24) zum zumindest bereichsweisen Aufnehmen des Batteriepols (12) und/oder des Isolators (30) ausgebildet ist.

10. Deckelanordnung nach einem der Ansprüche 3 bis 9, wobei der mindestens eine Überstand (15) in Form von mindestens einem Überlappungsbereich zwischen dem Batteriepol (12) und dem Zelldeckel (21) im Bereich der Öffnung (22) ausbildet ist.

11. Verfahren zum Herstellen einer Deckelanordnung (20) gemäß einem der Ansprüche 3 bis 10, wobei ein Zelldeckel (21) mit mindestens einer Öffnung (22) und eine im Vorfeld gefertigte Terminalgruppe (10) bereitgestellt werden, wobei die Terminalgruppe (10) gegenüber dem Zelldeckel (21) gekippt und/oder gedreht und/oder verschoben wird und anschließend zumindest ein Batteriepol (12) der Terminalgruppe (10) durch die Öffnung (22) des Zelldeckels (21) hindurch geschoben wird, wobei nach dem Hindurchschieben des Batteriepols (12) die Terminalgruppe (10) und der Zelldeckel (21) zueinander ausgerichtet und miteinander verbunden werden.

12. Verfahren nach Anspruch 11, wobei der Zelldeckel (21) und die Terminalgruppe (10) durch zumindest bereichsweises Einbringen und Aushärten von einer Vergussmasse (30) und/oder durch Umformen miteinander verbunden werden.

13. Verfahren nach Anspruch 11 oder 12, wobei der Zelldeckel (21) und die Terminalgruppe (10) derart zueinander ausgerichtet werden, dass mindestens eine Kante des Zelldeckels (21) zu mindestens einer Kante der Terminalgruppe (10) fluchtend und/oder parallel ausgerichtet ist.

14. Verfahren nach einem der Ansprüche 11 bis 13, wobei die Terminalgruppe (10) gegenüber dem Zelldeckel (21) und gegenüber einer Isolatorplatte (31) gekippt und/oder gedreht und/oder verschoben wird und anschließend zumindest ein Batteriepol (12) der Terminalgruppe (10) durch eine Öffnung (32) der Isolatorplatte (31) und durch die Öffnung (22) des Zelldeckels (21) hindurch geschoben wird.

15. Batteriezelle (100), insbesondere in Form einer Lithiumionen-Batterie, aufweisend ein Zellgehäuse (130) mit mindestens einem im Zellgehäuse (130) angeordneten Zellstapel (120), wobei das Zellgehäuse (130) zumindest einseitig durch mindestens eine Deckelanordnung (20) gemäß einem der Ansprüche 3 bis 10 verschlossen ist.
